# EUROPEAN PATENT APPLICATION

(11) **EP 1 533 601 A2**
(43) Date of publication of application: **25.05.2005**
(21) Application number: 04105901.5
(22) Date of filing: 18.11.2004
(51) Int. Cl.: G01L 9/00, G01L 11/04

(54) **Surface acoustic wave diaphragm transducer**

(30) Priority: 20.11.2003 US 718433
(71) Applicant: Société de Technologie Michelin, 63000 Clermont-Ferrand Cedex 09 (FR); MICHELIN RECHERCHE ET TECHNIQUE S.A., CH-1463 Granges-Paccot (CH)
(72) Inventor: Sinnett, Jay Clifford, Greenville, South Carolina 29615 (US)
(74) Representative: Schlief, Thomas P.

(57) **Abstract**

A sensor assembly for monitoring physical parameters in a given environment, such as in a tire or wheel assembly, includes an improved interface between sensor components. The sensor assembly includes a piezoelectric substrate on which resonator elements, such as surface acoustic wave (SAW) resonators are provided. The resonators are configured to produce electrical output at predetermined resonator frequency ranges that can be monitored to determined such information as pressure and temperature to which such devices are subjected. A projection is formed on a surface of the piezoelectric substrate, which selectively interfaces with a recessed surface area in a fexible lid casing component. The lid casing component and a rigid base casing component combine to form an enclosed package for the sensor assembly. An antenna may be coupled to the sensor assembly to facilitate receipt and/or transmission of communicated signals.

## Description

### FIELD OF THE INVENTION

The present invention generally concerns surface acoustic wave (SAW) devices utilized for sensing physical parameters, such as pressure and/or temperature, as may be associated with a tire or wheel environment. More particularly, an improved interface between respective pressure-sensing diaphragm and internal sensor components of such SAW devices is provided.

### BACKGROUND OF THE INVENTION

The incorporation of electronic devices with pneumatic tire structures yields many practical advantages. Tire electronics may include sensors and other components for obtaining information regarding various physical parameters of a tire, such as temperature, pressure, number of tire revolutions, vehicle speed, etc. Such performance information may become useful in tire monitoring and warning systems, and may even potentially be employed with feedback systems to regulate proper tire pressure levels.

One particular type of condition-responsive device that has been utilized to determine various parameters related to a tire or wheel assembly is an acoustic wave device, such as a surface acoustic wave (SAW) device. Such SAW devices may include at least one resonator element made up of interdigital electrodes deposited on a piezoelectric substrate. When an electrical input signal is applied to a SAW device, selected electrodes cause the SAW to act as a transducer, thus converting the input signal to a mechanical wave in the substrate. Other structures in the SAW reflect the mechanical wave and generate an electrical output signal. In this way, the SAW acts like an electromechanical resonator. A change in the output signal from a SAW device, such as a change in frequency, phase and/or amplitude of the output signal, corresponds to changing characteristics in the propagation path of the SAW device. In some SAW device embodiments, monitored device frequency and any changes thereto provide sufficient information to determine parameters such as temperature, and strain to which a SAW device is subjected.

In accordance with a known particular SAW device embodiment, a piezoelectric substrate is provided with one or more resonator elements positioned thereon. A casing assembly for packaging the SAW device includes respective base and lid portions The Lid portion is configured for operation as a pressure-sensing diaphragm and is provided with a dimple that aligns precisely with a given surface area on the piezoelectric substrate.

Proper mechanical alignment of the diaphragm dimple to its given surface area on the piezoelectric substrate can sometimes be difficult to ensure due to the nature of positioning a relatively small dimple point to a precise location on the substrate. Additional uncertainty may arise when aligning such portions of a SAW device due to potential unpredictability in the performance of the casing assembly during assembly and welding. As such, an improved interface between the respective pressure sensing diaphragm and piezoelectric substrate portions of a SAW device is desired.

While various implementations of acoustic wave devices such as SAW sensors have been developed, no design has emerged that generally encompasses all the desired characteristics as hereafter presented in accordance with the subject technology.

### SUMMARY OF THE INVENTION

In view of the recognized features encountered in the prior art and addressed by the present subject matter, an improved surface acoustic wave (SAW) device utilized for sensing various physical parameters has been developed. Such a SAW device is provided with an improved interface between respective pressure-sensing diaphragm and internal sensor components of the device.

In accordance with one exemplary embodiment of the present invention, an improved sensor assembly includes a substrate with one or more resonator elements provided thereon. The substrate preferably consists of a piezoelectric material, such as quartz, and the resonator elements may be surface acoustic wave (SAW) resonators. A projection is also provided on the substrate in a predetermined location for force application with a portion of a casing assembly that is configured to encase the substrate and components provided thereon.

In other more particular exemplary embodiments of the present invention, the casing assembly comprises first and second casing components. A first casing component corresponds to a rigid base portion for supporting the substrate. A second casing component corresponds to a lid portion that is secured to the base portion and that is provided with a recessed surface area or indention at a location for interfacing with the projection provided on the substrate. The lid portion is configured to flex upon subjection to certain amounts of pressure, whereby the recessed surface area and projection come into physical contact. This physical contact affects the strain cf selected resonator elements on the substrate, resulting in a change to their electrical output signals, thus yielding an indication of change in pressure or strain. The electrical output of other resonator elements may provide an.. indication of different physical parameters such as temperature.

Still further embodiments of the present invention involve integration of the above sensor assembly embodiments with a pneumatic tire structure and/or wheel assembly to yield a tire assembly with the ability to monitor and measure physical parameters such as temperature or pressure. Antennas are preferably coupled to such sensor assemblies to facilitate the communication of remote signals to and from the resonator elements.

An advantage of certain embodiments of the present invention is that mechanical alignment is facilitated at the interface formed by the surface indentation of the casing assembly and the projection on the substrate because the alignment now does not need to be as precise during assembly of the casing portions of the sensor assembly. Thus, a SAW sensor with improved ease of assembly is afforded.

A further advantage of certain embodiments of the present invention is that modification of the sensing diaphragm embodied by the lid portion of the casing assembly is permitted to have a lower spring constant, thus reducing the contribution of hysteresis and nonlinearity from the diaphragm and allowing the piezoelectric substrate to operate closer to its inherent capability for linearity and stability.

Additional objects and advantages of the present subject matter are set forth in, or will be apparent to, those of ordinary skill in the art from the detailed description herein. Also, it should be further appreciated that modifications and variations to the specifically illustrated, referred and discussed features and steps hereof may be practiced in various embodiments and uses of the invention without departing from the spirit and scope of the subject matter. Variations may include, but are not limited to, substitution of equivalent means, features, or steps for those illustrated, referenced, or discussed, and the functional, operational, or positional reversal of various parts, features, steps, or the like.

Still further, it is to be understood that different embodiments, as well as different presently preferred embodiments, of the present subject matter may include various combinations or configurations of presently disclosed features, steps, or elements, or their equivalents (including combinations of features, parts, or steps or configurations thereof not expressly shown in the figures or stated in the detailed description of such figures). Additional embodiments of the present subject matter, not necessarily expressed in this summarized section, may include and incorporate various combinations of aspects of features, components, or steps referenced in the summarized objectives above, and/or other features, components, or steps as otherwise discussed in this application. Those of ordinary skill in the art will better appreciate the features and aspects of such embodiments, and others, upon review of the remainder of the specification.

### BRIEF DESCRIPTION OF THE DRAWINGS

A full and enabling disclosure of the present subject matter, including the best mode thereof, directed to one of ordinary skill in the art, is set forth in the specification, which makes reference to the appended figures, in which:
Figure 1 provides a plan view of known aspects of an exemplary prior art SAW assembly;
Figure 2 provides a cross-sectional view of the exemplary SAW assembly of Figure 1 with known casing features;
Figure 3 provides a plan view of an exemplary SAW assembly in accordance with aspects of the present invention;
Figure 4 provides a cross-sectional view of the exemplary SAW assembly of Figure 3 with casing features in accordance with the aspects of the present invention; and
Figure 5 provides a generally perspective view of an exemplary pneumatic tire structure with an integrated SAW assembly in accordance with aspects of the present invention.

Repeat use of reference characters throughout the present specification and appended drawings is intended to represent same or analogous features or elements of the invention.

### DETAILED DESCRIPTION OF THE PREFERRED EMBODIMENTS

As discussed in the Summary of the Invention section, the present subject matter is particularly concerned with surface acoustic wave (SAW) devices utilized for sensing physical parameters, such as pressure and/or temperature, as may be associated with a tire or wheel environment. More particularly, an improved interface between respective pressure-sensing diaphragm and internal sensor components of such SAW devices is provided.

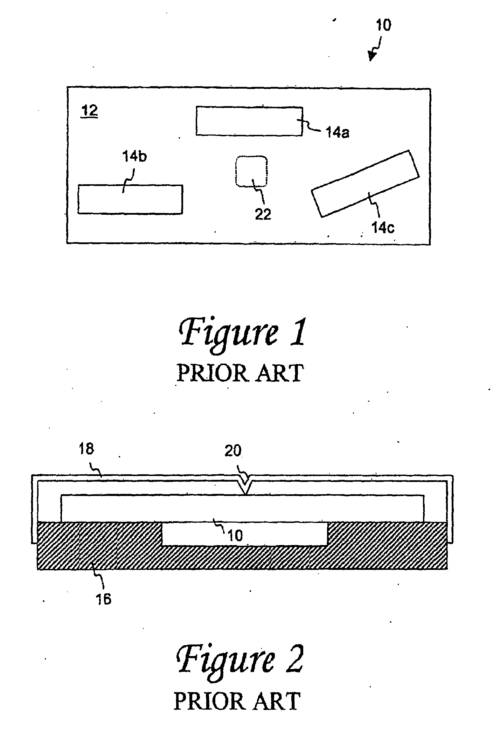

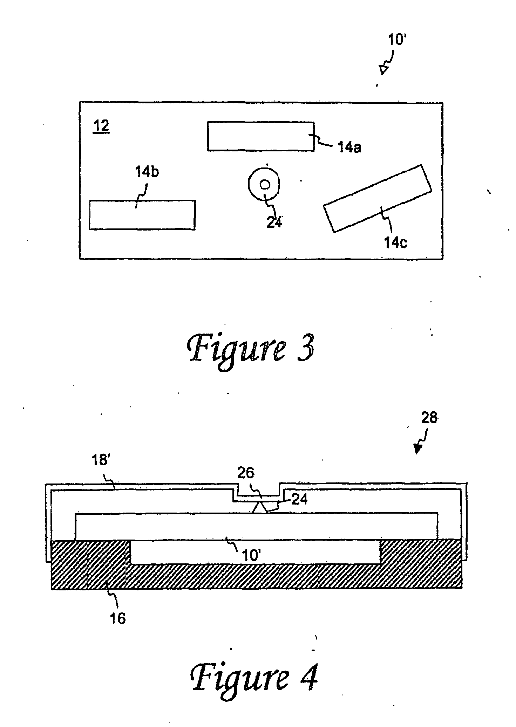

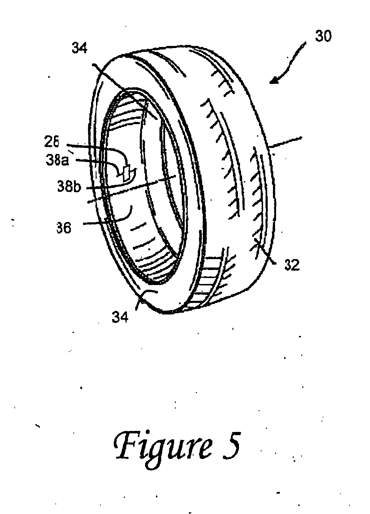

Figures 1 and 2 present aspects of a prior art SAW device, including general casing features and a specific exemplary interface between pressure-sensing diaphragm and internal sensor components of such a SAW device. Figures 3 and 4 illustrate an exemplary SAW device in accordance with the present invention, with improved casing features and interface between pressure-sensing components of such SAW device. The exemplary SAW device of Figures 3and 4 may be incorporated in a tire or wheel assembly to measure various physical parameters associated with such an environment, exemplary aspects of which are illustrated in Figure 5.

Referring now to particular aspects of the drawings, Figure 1 provides a plan view of a prior art SAW device 10, which is configured to provide an indication of certain parameters, such as temperature and strain, to which the SAW device is subjected. SAW device 10 includes a piezoelectric substrate 12 with one or more resonator elements 14 provided thereon. One example of a suitable material for piezoelectric substrate 12 is quartz. Resonator elements 14a, 14b and 14c (collectively referred to as 14) are each provided with slightly different resonator frequencies. One specific example of three different resonant frequencies that may be simultaneously radiated for a given combination of environmental conditions is 433.28 MHz, 433.83 MHz, and 434.26 MHz. Each resonance shifts slightly in response to one or more parameters being sensed. Three resonator elements in combination yield a condition-responsive device that provides sufficient information to determine both the temperature and pressure levels in a tire. For example, resonator element 14a may provide information to determine the strain/pressure associated with SAW device 10 while a differential measurement obtained from resonator elements 14b and 14c provides temperature information. The resonant frequencies for such multiple resonator elements are preferably designed such that the distance between adjacent resonant frequencies is always greater than the resonator bandwidths at any pressure or temperature condition within a tire.

Referring now to Figure 2, a casing assembly for packaging the SAW device 10 includes a rigid base portion 16 and a lid portion 18 collectively providing a sealed package for SAW device 10. In one embodiment, rigid base portion 16 may be formed of a metal or a ceramic material, and lid portion 18 may be formed of a metal alloy such as iron, nickel and cobalt, or a Kovar brand metal alloy in more particular embodiments. The lid portion 18 is configured for operation as a pressure-sensing diaphragm and is provided with a dimple 20 that aligns precisely with a given surface area 22 on the piezoelectric substrate 12 (see Figure 1). Upon subjection to certain ranges of strain or pressure, the dimple 10 in lid portion 18 may exhibit a downward force on the substrate 12, thus yielding a resultant change in the resonant frequency of resonator element 14a. This change of resonant frequency can be monitored to determine the strain or pressure to which SAW device 10 is subjected.

Proper mechanical alignment of the diaphragm dimple 20 to its given surface area 22 on the piezoelectric substrate 12 can sometimes be difficult to ensure due to the nature of positioning a relatively small dimple point to a precise location on the substrate. Additional uncertainty may arise when aligning such portions of a SAW device 10 due to potential unpredictability in the performance of the casing assembly 16,18 during assembly and welding. As such, the present invention generally provides for an improved interface between the pressure sensing diaphragm portion 18 and piezoelectric substrate portion 12 of a SAW device, such as will now be presented with respect to Figures 3, 4 and 5.

Some features of the exemplary SAW device illustrated in Figures 3 and 4 are the same or similar to features illustrated and already discussed with reference to Figures 1 and 2, and in such instances like reference numerals are used to indicate such similarity. Figure 3 provides a plan view of a SAW device 10' in accordance with aspects of the present invention. SAW device 10' includes a piezoelectric substrate 12 with one or more resonator elements 14 provided thereon. One example of a suitable material for piezoelectric substrate 12 is quartz. Resonator elements 14a, 14b and 14c (collectively referred to as 14) are each provided with slightly different resonator frequencies. One specific example of three different resonant frequencies that may be simultaneously radiated for a given combination of environmental conditions is 433.28 MHz, 433.83 MHz, and 434.26 MHz. Each resonance shifts slightly in response to one or more parameters being sensed. Three resonator elements in combination yield a condition-responsive device that provides sufficient information to determine both the temperature and pressure levels in a tire. For example, resonator element 14a may provide information to determine the strain/pressure associated with SAW device 10' while a differential measurement obtained from resonator elements 14b and 14c provides temperature information. The resonant frequencies for such multiple resonator elements are preferably designed such that the distance between adjacent resonant frequencies is always greater than the resonator bandwidths at any pressure or temperature condition within a tire.

Referring now to Figure 4, a casing assembly for packaging the SAW device 10' includes a rigid base portion 16 and a lid portion 18' collectively providing a sealed package for SAW device 10'. In one embodiment, rigid base portion 16 may be formed of a metal or a ceramic material, and lid portion 18' may be formed of a metal alloy such as iron, nickel and cobalt, or Kovar brand metal alloy in more particular embodiments. The lid portion 18' is configured for operation as a pressure-sensing diaphragm, and upon subjection to certain ranges of strain or pressure, at least part of the lid portion 18' may exhibit a downward force on the substrate 12, thus yielding a resultant change in the resonant frequency of resonator element 14a. This change of resonant frequency can be monitored to determine the amount of strain or pressure to which SAW device 10' is subjected.

In contrast to the exemplary prior art SAW device embodiment 10 of Figures 1 and 2, the SAW device embodiment of Figures 3 and 4 provides an improved interface between the pressure sensing diaphragm embodied by lid portion 18' and the point of application of force on piezoelectric substrate 12. A small raised projection 24 is attached to the piezoelectric substrate 12 at the given general location 22 as indicated in Figure 1. Projection 24 may be formed, for example, of a metallic or ceramic material applied to substrate 12 via photolithography process or other comparable process as is within the purview of one of ordinary skill in the art. Projection 24 may alternatively be preformed and then attached to substrate 12 with an adhesive material such as epoxy or the like. Provision of projection 24 to substrate 12 thus precisely locates the point of application of force relative to the substrate 12 before assembly.

Referring to the SAW device embodiment 28 of Figure 4, an improved lid portion 18' is provided with a relatively small and substantially flat surface indentation 26. In more particular exemplary embodiments, surface indentation 26 may be generally circular or square in shape with a surface area of about twelve square micrometers. Mechanical alignment is facilitated at the interface formed by the surface indentation 26 of lid portion 18' and the projection 24 on substrate 12 because the alignment now does not need to be as precise during assembly of the casing portions of the SAW device assembly 28. Furthermore, the embodiment 28 presented in Figure 4 permits modification of the sensing diaphragm embodied by lid portion 18' to have a lower spring constant, thus reducing the contribution of hysteresis and nonlinearity from the diaphragm 18' and allowing the piezoelectric substrate 12 to operate closer to its inherent capability for linearity and stability.

As previously mentioned, the SAW sensor assembly of the present invention, an example of which has been presented with respect to Figures 3 and 4, may be utilized to sense such physical parameters as temperature and/or pressure in vehicle applications such as in a tire or wheel assembly. Referring now to Figure 5, an exemplary perspective view is provided of a pneumatic tire 30 characterized by a crown having an exterior tread portion 32, bead portions, and sidewall portions 34 extending between each tire bead and the crown. An inner liner 36 is provided along the interior crown and sidewall surfaces, to which a SAW device 28 in accordance with the present invention may be mounted. SAW device 28 may alternatively be mounted to the wheel rim, valve stem, or other suitable location associated with a tire or wheel assembly.

In order to wirelessly communicate with a remote transceiver location, SAW device 28 may also include an antenna. When SAW device 28 is configured as a single port device with two or more physical connection points to the single port, an antenna may be connected to such input port of SAW device 28 to facilitate the transmission of output signals therefrom, For instance, two antenna wires 38a and 38b may be provided in combination to serve as a dipole antenna for the condition-responsive device. Antenna wires 38a and 38b may have respective straight or curved configurations and lengths that are designed for optimal signal propagation. It should be appreciated that other antenna configurations, such as monopole antennas, loop antennas, helical antennas, or others as within the purview of one of ordinary skill in the art, is within the spirit and scope of the present invention.

While the present subject matter has been described in detail with respect to specific embodiments thereof, it will be appreciated that those skilled in the art, upon attaining an understanding of the foregoing may readily produce alterations to, variations of, and equivalents to such embodiments. Accordingly, the scope of the present disclosure is by way of example rather than by way of limitation, and the subject disclosure does not preclude inclusion of such modifications, variations and/or additions to the present subject matter as would be readily apparent to one of ordinary skill in the art.

## Claims

1. A sensor assembly, comprising:
a substrate with at least one acoustic wave resonator provided thereon, wherein said at least one acoustic wave resonator is configured to provide an electrical output signal indicative of an associated physical parameter;
a projection provided on and extending from a selected location on said substrate; and
a casing assembly for providing a sealed package around said substrate and components provided thereon;
wherein at least a portion of said casing assembly forms a recessed surface area capable of flexing tc interface with the projection provided on and extending from a selected location on said substrate.

2. The sensor assembly of claim 1, further comprising two additional acoustic wave resonators provided on said substrate.

3. The sensor assembly of claim 2, wherein said acoustic wave resonators are surface acoustic wave (SAW) resonators, and wherein said resonators are configured to provide output signals indicative or pressure and temperature to which said sensor assembly is subjected.

4. The sensor assembly of claim 1, further comprising an antenna coupled to said at least one resonator for facilitating the transmission of said electrical output signals therefrom.

5. The sensor assembly of claim 1, wherein said projection is formed on said substrate via photolithography.

6. The sensor assembly of claim 1, wherein said projection is attached to said substrate via an adhesive.

7. The sensor assembly of claim 1, wherein said substrate comprises quartz.

8. A sensor assembly, comprising:
a piezoelectric substrate with at least one acoustic wave resonator element provided thereon, wherein said at least one acoustic wave resonator element is configured to provide an electrical output signal indicative of an associated physical parameter;
a projection provided on and extending from a selected location on said piezoelectric substrate;
a first casing portion for providing a rigid base to support said piezoelectric substrate; and
a second casing portion for providing a flexible lid configured for adjacent positioning to said first casing portion such that said first and second casing portions form an enclosure for said piezoelectric substrate and components provided thereon;
wherein a substantially flat indentation area is formed in said second casing portion, said substantially flat indentation area being configured to selectively interface with the projection provided on and extending from a selected location on said piezoelectric substrate

9. The sensor assembly of claim 8, further comprising two additional acoustic wave resonator elements provided on said piezoelectric substrate.

10. The sensor assembly of claim 9, wherein said acoustic wave resonator elements are surface acoustic wave (SAW) resonator elements, and wherein said resonator elements are configured to provide output signals indicative or pressure and temperature to which said sensor assembly is subjected.

11. The sensor assembly of claim 8, further comprising an antenna coupled to said at least one resonator element for facilitating the transmission of said electrical output signals therefrom.

12. The sensor assembly of claim 8, wherein said substantially flat indentation area is at least about twelve square micrometers.

13. The sensor assembly of claim 8, wherein selected of said first and second casing assemblies and said projection comprise a metallic material

14. A tire assembly, comprising:
a pneumatic tire structure;
a sensor assembly mounted to said pneumatic tire structure, said sensor assembly comprising:
a substrate with at least one acoustic wave resonator element provided thereon, wherein said at least one acoustic wave resonator element is configured to provide an electrical output signal indicative of an associated physical parameter;
a projection provided on and extending from a selected location on said substrate; and
a casing assembly for providing a sealed package around said substrate and components provided thereon;
wherein at least a portion of said casing assembly forms a recessed surface area capable of flexing to interface with the projection provided on and extending from a selected location on said substrate.

15. The tire assembly of claim 14, wherein said sensor assembly further comprises two additional acoustic wave resonator elements provided on said substrate.

16. The tire assembly of claim 14, wherein said acoustic wave resonator elements are surface acoustic wave (SAW) resonator elements, and wherein said resonator elements are configured to provide output signals indicative or pressure and temperature to which said sensor assembly is subjected.

17. The tire assembly of claim 14, further comprising an antenna coupled to said at least one resonator element for facilitating the transmission of said electrical output signals therefrom.

18. The tire assembly of claim 14, wherein said casing assembly comprises a first casing portion for providing a rigid base to support said substrate and a second casing portion for providing a flexible lid configured for adjacent positioning to said first casing portion such that said first and second casing portions form an enclosure for said substrate and components provided thereon.

19. The tire assembly of claim 18, wherein said recessed surface area is formed in said second casing portion.
